# EUROPEAN PATENT SPECIFICATION

(11) **EP 3 942 268 B1**
(45) Date of publication and mention of the grant of the patent: **12.02.2025**
(21) Application number: 20719491.1
(22) Date of filing: 19.03.2020
(51) Int. Cl.: G01L 3/04, F16F 15/00, G01M 13/025, F16F 15/10, G01M 15/04

(54) **TORSIOMETER**
TORSIOMETER
TORSIOMÈTRE

(30) Priority: 20.03.2019 IT 201900004079
(43) Date of publication of application: 26.01.2022
(73) Proprietor: Muviq S.r.l., 10015 Ivrea (TO) (IT)
(72) Inventor: CASTRO, Damiano, 66100 Chieti (IT)
(74) Representative: Studio Torta S.p.A.
(86) International application number: PCT/IB2020/052516
(87) International publication number: WO 2020/188512

(56) References cited:
- CN-A- 108 152 030
- US-A1- 2011 011 169

## Description

### CROSS-REFERENCE TO RELATED APPLICATIONS

This patent application claims priority from Italian patent application no. 102019000004079 filed on 20/03/2019.

### TECHNICAL FIELD

The present invention relates to a torsiometer, and particularly to a torsiometer for torsional measurements on components of automotive transmission systems such as, for example, tensioners for belt transmission systems.

### BACKGROUND ART

As is known, tensioners for belt transmission systems basically comprise a base designed to be fastened to the engine, an arm rotatable on a pin carried by the base and a pulley carried by the arm at one end thereof and designed to cooperate with the belt to transmit a tensioning force thereto.

For this purpose, the tensioner comprises a spring having an end constrained to the base and an end constrained to the arm, so as to transmit a tensioning torque to the arm.

In order to check the performance of the tensioners, a torsiometer is normally used in which rotation angles of the arm are set with respect to the base and the tensioning torque is measured.

Known torsiometers normally comprise a motor unit constituted by an electric motor equipped with a spindle on which the base of the tensioner is mounted and a torsiometric unit comprising a torsiometric cell facing the spindle and coaxial thereto. The torsiometric cell is interposed between a fixed support, the position of which relative to the spindle is adjustable by a slide, and a reaction member on which the arm discharges its force in response to the rotation of the base. The angle of rotation of the base is measured by an encoder associated with the spindle.

Torsiometers of the previously described type suffer from a certain number of causes of error.

A first cause of error is linked to the fact that transducers of the torsiometric cell, no matter how opportunely oriented, also "sense" a flexural component of the deformation, in addition to the torsional one. The resulting error is proportional to the torque.

A second cause of error is linked to the fact that the tensioner generates radial forces that tend to misalign the spindle and the torsiometric cell; the shift grows with wear and causes systematic errors, the influence of which increases as the length of the tensioner's arm decreases.

Another cause of error is the flexure of the spindle, proportional to the torque.

Finally, another cause of error is constituted by the fact that the encoder detects angles not exactly corresponding to the actual rotation, as part of the stress that should cause pure torsional deformation of the spring, in reality produces flexural deformations.

From the combined foregoing considerations, the need emerges for producing a torsiometer that reduces measurement uncertainty.

US 2011/0011169 A1 discloses a test stand for an internal combustion engine including a drive and/or load system, a force transmission device for connecting the internal combustion engine with the drive and/or load system, and a sensor and evaluation system for automatically collecting and evaluating measurement variables, wherein the force transmission device comprises a system for detecting torque and rotation angle, which system is coupled to the internal combustion engine in a torsionally stiff manner.

### DISCLOSURE OF INVENTION

The aforementioned object is achieved by a torsiometer according to claim 1, wherein the torsiometric cell is interposed between the motor unit and the spindle, coaxially with the latter, and is connected to at least one of the spindle and the motor unit by a joint configured to absorb bending loads.

In this way, the above described causes of error are eliminated.

According to the invention, the joint is a multi-stage universal joint. Moreover, said joint is configured to absorb the bending loads and comprising a plurality of elements constrained to each other in a rotatable manner about mutually orthogonal axes. Preferably, said elements are telescopically mounted one inside the other.

### BRIEF DESCRIPTION OF THE DRAWINGS

For a better understanding of the present invention, a preferred embodiment is described hereinafter, by way of non-limitative example and with reference to the accompanying drawings, in which:
Figure 1 is a perspective view of a torsiometer according to the invention;
Figure 2 is a section of the torsiometer of Figure 1 along an axial centre plane;
Figure 3 is an enlarged view of a detail of Figure 2;
Figure 4 is a section along the line IV-IV of Figure 3;
Figure 5 is a perspective view of a joint of the torsiometer of Figure 1; and
Figure 6 is an exploded perspective view of the joint of Figure 5.

### BEST MODE FOR CARRYING OUT THE INVENTION

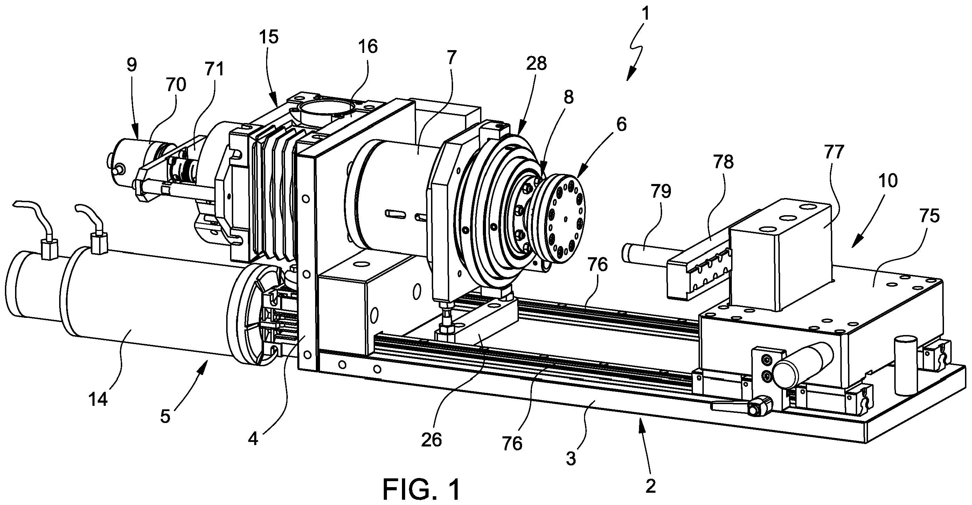

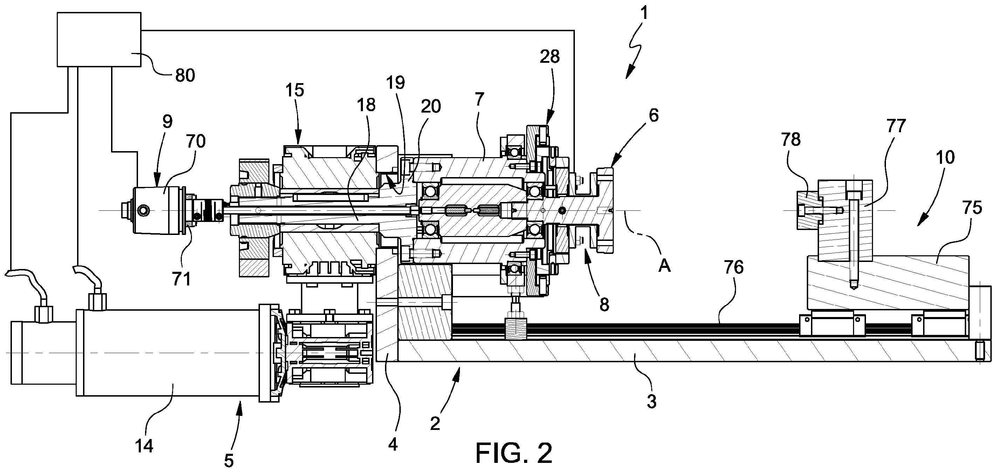

With reference to Figures 1 and 2, reference numeral 1 indicates, as a whole, a torsiometer for testing tensioners for belt transmission systems.

The torsiometer 1 essentially comprises:
- a fixed support structure 2, comprising a horizontal table 3 and a vertical wall 4;
- a motor unit 5 supported by the vertical wall 4;
- a spindle 6 rotationally coupled to an output member 7 of the motor unit 5 by a torsiometric cell 8 and extending in a cantilever fashion above the table 3;
- an encoder 9 associated with the spindle 6 and designed to measure the rotation angles thereof; and
- a reaction unit 10 mounted on the table 3 in an adjustable position and facing the spindle 6.

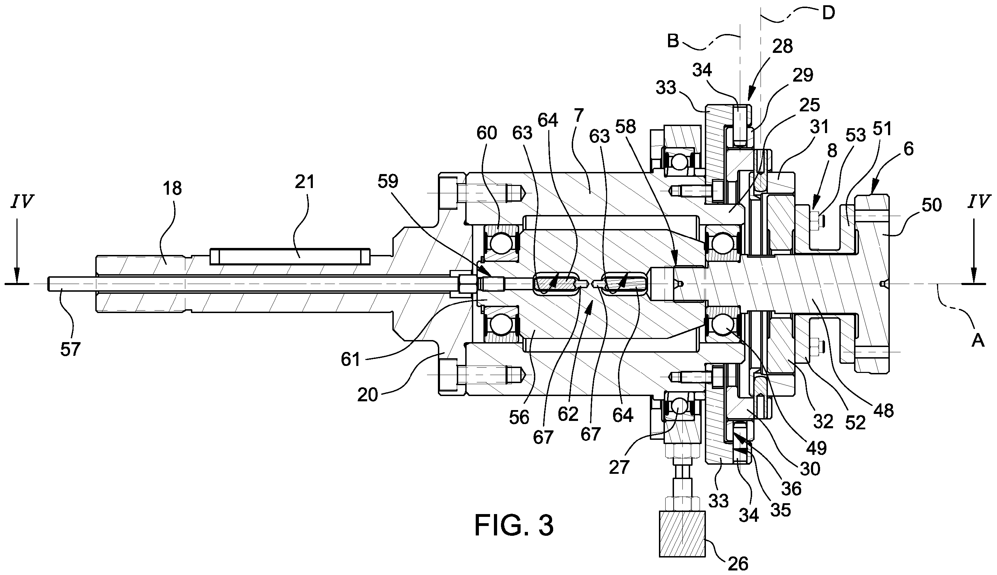

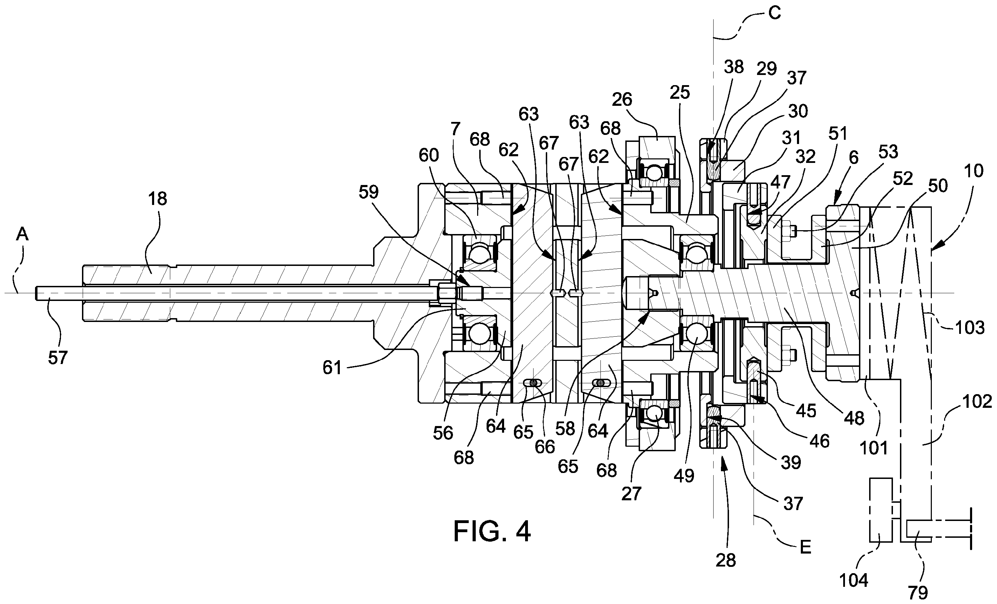

More specifically, the motor unit 5 comprises an electric motor 14 and a reduction gear 15, not described in detail as it does not form part of the present invention. The reduction gear 15 comprises an outer casing 16 fixed to the vertical wall 4 in a cantilever fashion on the opposite side of the table 3, and a hollow shaft 18 lying on axis A, extending through an opening 19 in the vertical wall 4 and terminating with a flange 20 (Figure 2). The hollow shaft 18 receives the motion from an output member of the reduction gear 15, not shown, through a tongue 21 (Figures 3 and 4).

A sleeve lying on axis A, constituting the output member 7 of the motor unit 5 and therefore referred to hereinafter as "sleeve 7" for brevity, is fixed to the flange 20.

The sleeve 7 extends over the table 3 and is supported, in proximity of its opposite end 25, by an adjustable support 26 fixed to the table 3 by a radial bearing 27.

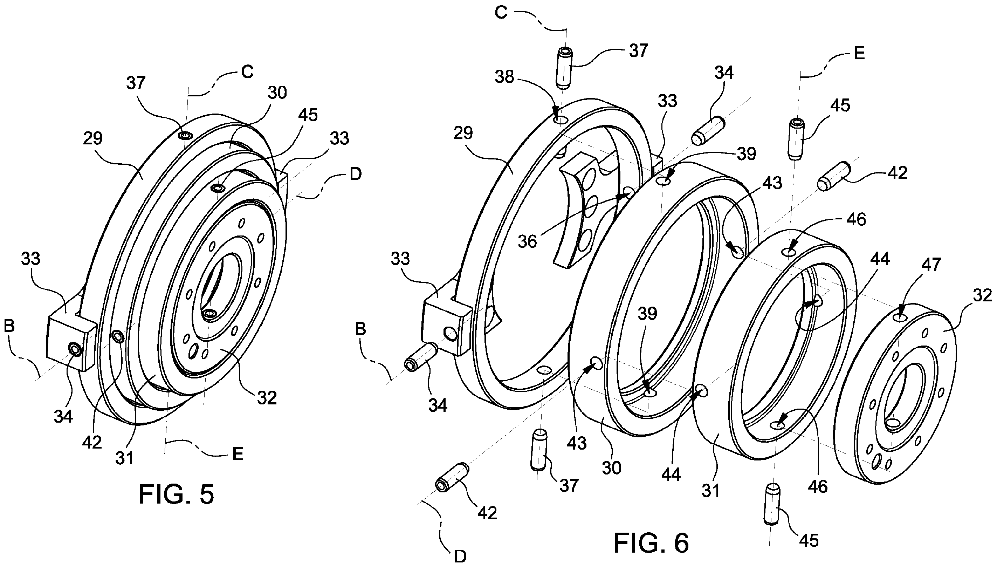

The end 25 of the sleeve 7 is connected to the load cell 8 by a multi-stage universal joint 28, shown in detail in Figures 5 and 6.

With reference to these figures, the universal joint 28 basically comprises three rings 29, 30, 31 and an output flange 32, telescopically mounted one inside the other.

The outer ring 29 is constrained to the sleeve 7 with rotational freedom about an axis B orthogonal to the axis A and incident therewith. This constraint is implemented by means of a pair of diametrically opposite brackets 33, radially fixed in an outwardly cantilever fashion on the end 25 of the sleeve 7, and a pair of radial pins 34 lying on axis B, engaging respective holes 35 of the brackets 33 in an angularly free manner and embedded in respective diametrically opposite radial holes 36 of the outer ring 29 (Figures 3 and 6).

The intermediate ring 30 is constrained to the outer ring 29 with rotational freedom about an axis C orthogonal to the axis B. This constraint is implemented by means of a pair of radial pins 37 lying on axis C, engaging respective holes 38 of the outer ring 29 in an angularly free manner and embedded in respective diametrically opposite radial holes 39 of the intermediate ring 30.

In an entirely similar manner, the inner ring 31 is constrained to the intermediate ring 30 with rotational freedom about an axis D perpendicular to the axis C. This constraint is implemented by means of a pair of radial pins 42 lying on axis D, engaging respective holes 43 of the intermediate ring 30 in an angularly free manner and embedded in respective diametrically opposite radial holes 44 of the inner ring 31.

Finally, the output flange 32, this also having an annular shape, is constrained to the inner ring 31 with rotational freedom about an axis E perpendicular to the axis D. This constraint is implemented by means of a pair of radial pins 45 lying on axis E, engaging respective holes 46 of the inner ring 31 in an angularly free manner and embedded in respective diametrically opposite radial holes 47 of the output flange 7.

The flange 32 is connected to the spindle 6 by the torsiometric cell 8.

More specifically, the spindle 6 comprises a shaft 48 lying on axis A, which is radially supported by a bearing 49 housed in the end 25 of the sleeve 7 and extends passing through the universal joint 28, and an end flange 50 facing the flange 32 of the joint. The torsiometric cell 8, having an annular shape, is housed coaxially with the shaft 48 between the flange 32 and the flange 50 of the spindle 6, and has respective end flanges 51, 52, which are respectively fixed to the flange 32 and the flange 50 of the spindle 6 by respective pluralities of axial screws. In Figures 3 and 4, only the screws 53 for connection to the output flange 7 are shown.

The spindle 6 is integrally connected to an elongated shaft 57 housed inside the hollow shaft 18. For this purpose, the spindle 6 comprises a spacer 56 lying on axis A, arranged inside the sleeve 7 and connected to the shaft 48 and to the shaft 57 by respective threaded connections 58, 59. The spacer 56 is radially supported with respect to the sleeve 7 by a bearing 60 at its end 61 opposite to the shaft 48, into which the shaft 57 screws. It is important to note that the bearings 49, 60 support the spindle 6 radially, but in an axially free manner, so as to avoid undesired exchanges of forces.

The axial positioning of the spindle 6 is defined by a constraint system 72 configured so as to avoid the transmission of forces or torque between the spindle 6 and the sleeve 7 (except for the axial constraint reaction).

This constraint system 72 preferably comprises a punctiform axial support produced as described below.

The sleeve 7 (Figure 4) is equipped with a pair of diametric through slots 62, parallel to each other, which have an elongated section in the axial direction and are aligned with each other in this direction.

In turn, the spacer 56 is provided with a pair of corresponding diametric through slots 63, parallel to each other, which have an elongated section in the axial direction and are aligned with each other in this direction.

The slots 62 and 63 house respective elongated bars 64 with axial clearance. The bars 64 are housed with transversal clearance in the slots 63 of the spacer 56, and instead housed in a sliding manner, but without transversal clearance, in the slots 62.

The bars 64 are provided with respective slots 65, elongated in the axial direction, which are engaged in a sliding manner by respective pins 66 carried by the sleeve 7, so as to create a purely radial (longitudinal) constraint for the bars 64.

The bars 64 rest centrally, with their axial ends facing each other, on axial pins 67 lying on axis A and carried by the spacer 5.

The punctiform axial support ensures that no torque is exchanged between the sleeve 7 and the spindle 6, except for the axial constraint reaction.

The bars 64 are also axially constrained to the sleeve 7 by respective pairs of grub screws 68 housed in respective axial holes 69 of the sleeve 7 and acting axially on the opposite ends of the bars 64, on the side opposite to pins 67.

The shaft 57 is connected, in a known manner that is not shown, to the mobile unit of the encoder 9, the casing 70 of which is fixed to the outer casing 16 of the reduction gear 15 by a bracket 71.

The reaction unit 10 (Figures 1 and 2) basically comprises a first slide 75 sliding in a direction parallel to the axis A on guides 76 arranged on the table 3. The first slide 75 carries a vertical support 77 for a second slide 78, sliding with respect thereto in a horizontal direction perpendicular to the axis A. The second slide 78 carries a reaction pin 79 extending in a cantilever fashion in a direction parallel to the axis A (Figures 1 and 4).

The torsiometric cell 9, the encoder 10 and the electric motor 14 are connected to an electronic control unit, which is designed to control the electric motor to perform the measurement cycles and record torque data as a function of the angle of rotation, in a manner which is in itself known.

The operation of the torsiometer 1 is as follows.

Figure 4 schematically shows a tensioner 100 for which it is wished to determine the torsiometric characteristic.

The tensioner 100 comprises, in a known manner, a base 101, an arm 102 rotatable on the base 101 against the action of a spring 103 interposed between them in a known manner, and an idler pulley 104 mounted on an end of the arm 102.

The base 101 of the tensioner is fixed on the flange 50 of the spindle 6 so that the axis of rotation of the arm 102 with respect to the base 101 coincides with the axis A.

The slides 75, 78 of the reaction unit 10 are configured and locked so as to arrange the reaction pin 79 in a position for interacting with the arm 102 of the tensioner 100 mounted on the spindle 6.

The measurement cycle comprises a first step of approach in which the electric motor 14, via the reduction gear 15, the hollow shaft 18, the sleeve 7, the universal joint and the torsiometric cell 8, makes the spindle 6 and the tensioner 100 rotate about the axis A, until the arm 102 comes into contact with the reaction pin 79 (Figure 4).

From this moment, a further rotation of the spindle 6 produces a deformation of the spring of the tensioner 100, as the arm 102 is locked by contact with the reaction pin 79, and the torsiometric cell 8 reads the torque transmitted in a manner in itself known; the angle of rotation of the spindle 6 is transmitted through the spacer 56 and shaft 57 to the encoder 9 and measured by the latter.

Since the torsiometric cell 8 is connected directly to the spindle 6 and is integral therewith, all error components related to parasitic eccentricities that might occur in known torsiometers, in which, as has been said, the torsiometric cell is usually arranged in the reaction unit, are eliminated.

Furthermore, due to the multi-stage universal joint 28, subjecting the torsiometric cell 8 to flexural stresses is avoided, therefore ensuring that the cell reads the pure torsion torque.

Finally, the punctiform axial support between the sleeve 7 and the spindle 6 ensures that, even in the presence of parasitic load components, albeit avoided due to the configuration of the constraints, there can be no torque transmitted between the sleeve 7 and the spindle 6.

Finally, it is clear that modifications and variants can be made to the described torsiometer 1 without departing from the scope defined in the claims.

For example, the joint 28 could be interposed between the load cell and the spindle 6, instead of between the sleeve 7 and the load cell 8.

Furthermore, the joint 28 and the constraint system 72 could be made in a different manner, as long as they are functionally equivalent.

The torsiometer 1 could be used for determining the torsional characteristic of different components, for example torsion dampers, by opportunely configuring the spindle 6 and the reaction member 79.

## Claims

1. A torsiometer for determining a torsiometric characteristic of a component (100) of an automotive transmission system, said component (100) comprising at least a first member (101) and a second member (102) rotationally coupled together by at least one elastic member (103) interposed therebetween, the torsiometer (1) comprising:
a spindle (6) having a rotation axis (A) and configured to receive the first member (101) of said component (100);
a motor unit (5) connected to the spindle (6) and designed to drive said spindle (6) to rotate about said axis (A);
a reaction unit (10) facing the spindle (6) and provided with a reaction member (79) for the second member (102) of said component (100);
an encoder (9) configured to measure the rotation angles of the spindle (6); and
a torsiometric cell (8) configured to measure the torque transmitted to the component (100), the torsiometric cell (8) being interposed between the motor unit (5) and the spindle (6), coaxially with the latter;
the torsiometer **characterised in that** the torsiometric cell (8) is connected to at least one of the spindle (6) and the motor unit (5) through a multi-stage universal joint (28) configured to absorb the bending loads and comprises a plurality of elements (29, 30, 31, 32, 33) constrained to each other in a rotatable manner about mutually orthogonal axes (B, C, D, E) .

2. The torsiometer as claimed in claim 1, **characterized in that** said universal joint (28) defines four axes (B, C, D, E) of relative rotation between said elements (29, 30, 31, 32, 33), said axes being mutually orthogonal pair-wise axes.

3. The torsiometer as claimed in claim 1 or 2, **characterized in that** at least three of said elements (29, 30, 31) are annular and are telescopically mounted one inside the other.

4. The torsiometer as claimed in any one of the preceding claims, **characterized in that** said joint (28) is arranged between an output member (7) of the motor unit (5) and said torsiometric cell (8).

5. The torsiometer as claimed in claim 4, **characterized in that** the torsiometric cell (8) is arranged between an output member (32) of the universal joint (28) and a flange (50) of said spindle (6).

6. The torsiometer as claimed in one of the preceding claims, **characterized in that** the output member of the motor unit (5) comprises a tubular sleeve (7) and the spindle (6) comprises at least one portion (56) supported coaxially inside the tubular sleeve (7).

7. The torsiometer as claimed in claim 6, **characterized in that** the spindle (6) is supported axially with respect to the sleeve (7) through a constraint system (72) configured so as to filter every force and torque exchanged between the spindle (6) and the sleeve (7) except for an axial constraint reaction.

8. The torsiometer as claimed in claim 7, **characterized in that** said constraint system comprises at least one punctiform axial support.

9. The torsiometer as claimed in claim 8, **characterized in that** the punctiform axial support is formed between at least one axial pin (67) rigidly connected to the spindle (6) and at least one bar mounted in a diametric direction through the spindle (6), said bar being constrained to the sleeve (7) at its ends.

10. The torsiometer as claimed in claim 9, **characterized in that** the axial constraint system comprises two bars (64) and two pins (67) defining opposite punctiform axial supports, each bar (54) being constrained to the sleeve (7) by means of adjustable end axial supports (68) opposite to the respective pin (67), each bar (64) being furthermore constrained to the sleeve (7) in a radial and transverse direction.

11. The torsiometer as claimed in one of claims 6 to 10, **characterized in that** the motor unit (5) comprises an electric motor (14) and a reduction gear (15) actuating a hollow shaft (18) rigidly connected to the sleeve (7), said encoder (9) having a casing (70) fixed to a casing of the reduction gear (15) and a mobile unit connected to the spindle (6) through a shaft (57) internally coaxial to said hollow shaft (18).

12. The torsiometer as claimed in any of the preceding claims, **characterized in that** said reaction unit (10) comprises a reaction member (79) configured to block the second member (102) of the component and at least one slide (75, 78) for adjusting the position of the reaction member (79) with respect to the spindle (6).

## Patentansprüche

1. Torsiometer zum Bestimmen einer torsiometrischen Eigenschaft einer Komponente (100) eines Kraftfahrzeuggetriebesystems, wobei die Komponente (100) ein erstes Element (101) und/oder ein zweites Element (102) aufweist, die über wenigstens ein elastisches Element (103), das zwischen ihnen angeordnet ist, drehfest miteinander gekoppelt sind, wobei das Torsiometer (1) aufweist:
eine Spindel (6), die eine Rotationsachse (A) hat und ausgestaltet ist zur Aufnahme des ersten Elements (101) der Komponente (100);
eine Motoreinheit (5), die mit der Spindel (6) verbunden ist und ausgestaltet ist zum Antreiben der Spindel (6) zwecks Drehung um die Achse (A);
eine Reaktionseinheit (10), die der Spindel (6) zugewandt ist und mit einem Rückhalteelement (79) für das zweite Element (102) der Komponente (100) versehen ist,
einen Encoder (9), der ausgestaltet ist zum Messen der Drehwinkel der Spindel (6);
und eine torsiometrisch messende Zelle (8), die ausgestaltet ist zum Messen des der Komponente (100) übertragenen Drehmoments, wobei die torsiometrisch messende Zelle (8) zwischen der Motoreinheit (5) und der Spindel (6), koaxial zu der letzteren, angeordnet ist;
wobei das Torsiometer **dadurch gekennzeichnet ist, dass** die torsiometrisch messende Zelle (8) mit der Spindel (6) und/oder der Motoreinheit (5) über eine mehrstufige Universalverbindung (28) verbunden ist, die ausgestaltet ist zum absorbieren der Biegebelastungen und mehrere Elemente (29, 30, 31, 32, 33) aufweist, die drehbar um zueinander orthogonale Achsen (B, C, D, E) aneinander befestigt sind.

2. Torsiometer nach Anspruch 1, **dadurch gekennzeichnet, dass** die Universalverbindung (28) vier Achsen (B, C, D, E) relativer Drehung zwischen den Elementen (29, 30, 31, 32, 33) definiert, wobei die Achsen paarweise zueinander orthogonale Achsen sind.

3. Torsiometer nach Anspruch 1 oder 2, **dadurch gekennzeichnet, dass** wenigstens drei der Elemente (29, 30, 31) ringförmig und teleskopartig, eine in der anderen, montiert sind.

4. Torsiometer nach einem der vorstehenden Ansprüche, **dadurch gekennzeichnet, dass** die Verbindung (28) zwischen einem Abgabeelement (7) der Motoreinheit (5) und der torsiometrisch messenden Zelle (8) angeordnet ist.

5. Torsiometer nach Anspruch 4, **dadurch gekennzeichnet, dass** die torsiometrisch messende Zelle (8) zwischen einem Abgabeelement (32) der Universalverbindung (28) und einem Flansch (50) der Spindel (6) angeordnet ist.

6. Torsiometer nach einem der vorstehenden Ansprüche, **dadurch gekennzeichnet, dass** das Abgabeelement der Motoreinheit (5) eine rohrförmige Hülse (7) aufweist und die Spindel (6) wenigstens einen Abschnitt (56) aufweist, der koaxial im Inneren der rohrförmigen Hülse (7) getragen ist.

7. Torsiometer nach Anspruch 6, **dadurch gekennzeichnet, dass** die Spindel (6) bezüglich der Hülse (7) axial getragen ist über ein Zwangssystem (72), das ausgestaltet ist, um jegliche zwischen der Spindel (6) und der Hülse (7) ausgetauschte Kraft und jedes ausgetauschte Drehmoment, mit Ausnahme einer axialen Zwangsreaktion, zu filtern.

8. Torsiometer nach Anspruch 7, **dadurch gekennzeichnet, dass** das Zwangssystem wenigstens einen punktförmigen axialen Träger aufweist.

9. Torsiometer nach Anspruch 8, **dadurch gekennzeichnet, dass** der punktförmige axiale Träger zwischen einem axialen Stift (67), der starr mit der Spindel (6) verbunden ist und/oder einem in diametraler Richtung durch die Spindel (6) angebrachten Stab ausgebildet ist, wobei der Stab an den Enden der Hülse (7) befestigt ist.

10. Torsiometer nach Anspruch 9, **dadurch gekennzeichnet, dass** das axiale Zwangssystem zwei Stäbe (64) und zwei Stifte (67) aufweist, die gegenüberliegende, punktförmige axiale Träger definieren, wobei jeder Stab (54) durch einstellbare axiale Endträger (68), gegen über dem jeweiligen Stift (67), an der Hülse (7) befestigt ist und jeder Stab (64) ferner in einer radialen und transversalen Richtung an der Hülse (7) gehalten ist.

11. Torsiometer nach einem der Ansprüche 6 bis 10, **dadurch gekennzeichnet, dass** die Motoreinheit (5) einen Elektromotor (14) und ein Untersetzungsgetriebe (15) aufweist, die eine Hohlwelle (18) antreiben, die starr mit der Hülse (7) verbunden ist, wobei der Encoder (9) ein Gehäuse (70) hat, das an einem Gehäuse des Untersetzungsgetriebes (15) befestigt ist, sowie eine bewegliche Einheit, die mit der Spindel (6) über eine Welle (57) verbunden ist, die innen koaxial zu der Hohlwelle (18) ist.

12. Torsiometer nach einem der vorstehenden Ansprüche, **dadurch gekennzeichnet, dass** die Reaktionseinheit (10) ein Rückhalteelement (79) aufweist, das ausgestaltet ist zum Blockieren des zweiten Elements (102) der Komponente und wenigstens einen Schlitten (75, 78) zum Einstellen der Position des Rückhalteelements (79) in Bezug auf die Spindel (6).

## Revendications

1. Torsiomètre pour déterminer une caractéristique torsiométrique d'un composant (100) d'un système de transmission automobile, ledit composant (100) comprenant au moins un premier organe (101) et un deuxième organe (102) couplés en rotation l'un à l'autre par au moins un organe élastique (103) interposé entre eux, le torsiomètre (1) comprenant :
une broche (6) ayant un axe de rotation (A) et configurée pour recevoir le premier organe (101) dudit composant (100) ;
une unité motrice (5) reliée à la broche (6) et conçue pour entraîner ladite broche (6) pour tourner autour dudit axe (A) ;
une unité de réaction (10) faisant face à la broche (6) et dotée d'un organe de réaction (79) pour le deuxième organe (102) dudit composant (100) ;
un codeur (9) configuré pour mesurer les angles de rotation de la broche (6) ; et
une cellule torsiométrique (8) configurée pour mesurer le couple transmis au composant (100), la cellule torsiométrique (8) étant interposée entre l'unité motrice (5) et la broche (6), coaxialement avec celle-ci ;
le torsiomètre étant **caractérisé en ce que** la cellule torsiométrique (8) est reliée à au moins l'une parmi la broche (6) et l'unité motrice (5) par l'intermédiaire d'un cardan à étages multiples (28) configuré pour amortir les charges de flexion et comprend une pluralité d'éléments (29, 30, 31, 32, 33) contraints les uns aux autres de manière à pouvoir tourner autour d'axes mutuellement orthogonaux (B, C, D, E).

2. Torsiomètre selon la revendication 1, **caractérisé en ce que** ledit cardan (28) définit quatre axes (B, C, D, E) de rotation relative entre lesdits éléments (29, 30, 31, 32, 33), lesdits axes étant mutuellement orthogonaux en paires.

3. Torsiomètre selon la revendication 1 ou 2, **caractérisé en ce qu'**au moins trois desdits éléments (29, 30, 31) sont annulaires et sont montés de manière télescopique l'un à l'intérieur de l'autre.

4. Torsiomètre selon l'une quelconque des revendications précédentes, **caractérisé en ce que** ledit cardan (28) est agencé entre un organe de sortie (7) de l'unité motrice (5) et ladite cellule torsiométrique (8).

5. Torsiomètre selon la revendication 4, **caractérisé en ce que** la cellule torsiométrique (8) est agencée entre un organe de sortie (32) du cardan (28) et une bride (50) de ladite broche (6).

6. Torsiomètre selon l'une des revendications précédentes, **caractérisé en ce que** l'organe de sortie de l'unité motrice (5) comprend un manchon tubulaire (7), et la broche (6) comprend au moins une partie (56) supportée coaxialement à l'intérieur du manchon tubulaire (7).

7. Torsiomètre selon la revendication 6, **caractérisé en ce que** la broche (6) est supportée axialement par rapport au manchon (7) par l'intermédiaire d'un système de contraintes (72) configuré de manière à filtrer chaque force et chaque couple échangés entre la broche (6) et le manchon (7) à l'exception d'une réaction de contrainte axiale.

8. Torsiomètre selon la revendication 7, **caractérisé en ce que** ledit système de contrainte comprend au moins un support axial punctiforme.

9. Torsiomètre selon la revendication 8, **caractérisé en ce que** le support axial punctiforme est formé entre au moins une tige axiale (67) reliée rigidement à la broche (6) et au moins une barre montée dans une direction diamétrale à travers la broche (6), ladite barre étant contrainte au manchon (7) à ses extrémités.

10. Torsiomètre selon la revendication 9, **caractérisé en ce que** le système de contrainte axiale comprend deux barres (64) et deux tiges (67) définissant des supports axiaux punctiformes opposés, chaque barre (54) étant contrainte au manchon (7) au moyen de supports axiaux d'extrémité ajustables (68) opposés à la tige (67) respective, chaque barre (64) étant en outre contrainte au manchon (7) dans une direction radiale et transversale.

11. Torsiomètre selon l'une des revendications 6 à 10, **caractérisé en ce que** l'unité motrice (5) comprend un moteur électrique (14) et un réducteur (15) actionnant un arbre creux (18) relié rigidement au manchon (7), ledit codeur (9) ayant un boîtier (70) fixé à un boîtier du réducteur (15) et une unité mobile reliée à la broche (6) par l'intermédiaire d'un arbre (57) coaxial de manière interne audit arbre creux (18).

12. Torsiomètre selon l'une quelconque des revendications précédentes, **caractérisé en ce que** ladite unité de réaction (10) comprend un organe de réaction (79) configuré pour bloquer le deuxième organe (102) du composant et au moins un coulisseau (75, 78) pour ajuster la position de l'organe de réaction (79) par rapport à la broche (6).
